# FASCICULE DE BREVET EUROPEEN

(11) **EP 1 254 692 B1**
(45) Date de publication et mention de la délivrance du brevet: **14.04.2004**
(21) Numéro de dépôt: 02290983.2
(22) Date de dépôt: 18.04.2002
(51) Int. Cl.: B01D 35/153, B01D 29/21

(54) **Filtre a fluide pour moteur de vehicule automobile**
Fluidfilter für einen Kraftfahrzeugmotor
Fluid filter for an automotive internal combustion engine

(30) Priorité: 20.04.2001 FR 0105387
(43) Date de publication de la demande: 06.11.2002
(73) Titulaire: FILTRAUTO, 78180 Montigny le Bretonneux (FR)
(72) Inventeur: Richard, Thomas, Chesham, Bucks. HP5 3BG (GB)
(74) Mandataire: Garel, Régis

(56) Documents cités:
- EP-A- 1 031 367
- WO-A-01/12294
- DE-A- 3 538 589
- DE-A- 4 330 839

## Description

La présente invention se rapporte à un filtre à fluide pour moteur de véhicule automobile.

Plus particulièrement, l'invention concerne, parmi ces filtres à fluide, ceux qui comprennent :
- un boîtier comprenant un couvercle amovible et une cuve présentant un fond à partir duquel s'étend axialement une paroi latérale sensiblement annulaire fermée par le couvercle, le boîtier comprenant également, d'une part, un passage d'entrée de fluide et un passage de sortie de fluide, l'un desdits passages d'entrée et de sortie de fluide étant constitué par un tube de fluide qui s'étend axialement à partir du fond de la cuve, et d'autre part, un canal de purge qui débouche sur une portion du fond de la cuve et entre les passages d'entrée et de sortie de fluide,
- une cartouche filtrante comprenant un élément filtrant annulaire délimitant un espace intérieur creux dans lequel est disposé le tube de fluide, l'élément filtrant s'étendant axialement entre une première extrémité voisine du couvercle et une deuxième extrémité voisine du fond, les première et deuxième extrémités de l'élément filtrant étant fixées de manière étanche respectivement à des premier et deuxième flasques annulaires sensiblement rigides,
- des moyens d'étanchéité disposés contre le deuxième flasque pour assurer, lorsque la cartouche est en place dans le boîtier, l'étanchéité entre le passage d'entrée de fluide et le canal de purge et entre le passage de sortie de fluide et le canal de purge, lesdits moyens d'étanchéité comprenant un élément d'étanchéité axiale annulaire assurant l'étanchéité axiale entre le deuxième flasque et le tube de fluide, et un élément d'étanchéité radiale annulaire.

Un filtre de ce type est décrit dans la demande de brevet européen EP 10 31367, dans lequel le canal de purge présente un orifice débouchant par un élément tubulaire disposé au fond du réservoir de manière excentrée par rapport au passage de sortie et au passage d'entrée du fluide. L'étanchéité radiale n'est assurée que par le serrage du joint contre le rebord supérieur de l'élément tubulaire.

De plus, cet élément tubulaire forme un point d'appui excentré par rapport à l'axe de la cartouche qui crée des contraintes de flexion sur le deuxième flasque lors de la mise en place ou de l'utilisation normale de la cartouche filtrante. Or, ces contraintes de flexion sont dommageables pour ce type de cartouche filtrante. Elles entraînent notamment un basculement du deuxième flasque et donc une perte d'étanchéité entre le passage d'entrée et le canal de purge. Une telle perte d'étanchéité est bien entendu inacceptable lors de l'utilisation normale du filtre.

La présente invention a pour but de résoudre les problèmes techniques posés par l'état de la technique mentionnée ci-dessus, tout en évitant d'appliquer des contraintes sur la cartouche filtrante qui pourraient la déformer lorsqu'elle est en place dans le boîtier.

Ce but est atteint, selon la présente invention, par le fait que ladite portion du fond est une portion annulaire du fond de la cuve qui présente un contour interne, défini par une partie de la paroi du tube de fluide, et une face supérieure plane sur laquelle l'élément d'étanchéité radiale est maintenu en appui par le deuxième flasque de la cartouche pour assurer l'étanchéité radiale entre le deuxième flasque et la portion du fond, lorsque la cartouche est en place dans le boîtier.

Dans des modes de réalisation préférés de l'invention, on a recours en outre à l'une et/ou à l'autre des dispositions suivantes : - le deuxième flasque annulaire est pourvu d'un bord radialement interne qui s'étend au-delà de l'élément filtrant, ledit bord interne comportant une extrémité repliée axialement en direction de l'espace intérieur creux de la cartouche et l'élément d'étanchéité axiale des moyens d'étanchéité étant disposé entre l'extrémité repliée du deuxième flasque et le tube de fluide ;
- l'élément d'étanchéité axiale présente un rebord radialement saillant qui vient en butée contre l'extrémité repliée du deuxième flasque ;
- l'élément d'étanchéité axiale et l'élément d'étanchéité radiale sont formés d'une seule pièce, ledit élément d'étanchéité radiale s'étendant radialement vers l'extérieur à partir de l'élément d'étanchéité axiale ;
- la longueur du tube de fluide est au moins égale à la moitié de la longueur de la cartouche filtrante ;
- le passage de sortie de fluide est formé par le tube de fluide ; et
- la portion annulaire du fond de la cuve est saillante et présente un contour externe qui définit, avec une portion de la paroi annulaire de la cuve, une gorge annulaire, le passage d'entrée de fluide débouchant dans ladite gorge annulaire.

D'autres caractéristiques et avantages de l'invention apparaîtront au cours de la description qui va suivre de deux de ces formes de réalisation, données à titre d'exemples non limitatifs en regard des dessins joints.

Sur les dessins :
- la figure 1 représente une vue en coupe axiale d'un filtre à fluide conforme à l'invention selon un premier mode de réalisation des moyens d'étanchéité,
- la figure 2 est une vue en coupe axiale d'un filtre à fluide conforme à l'invention selon une variante du premier mode de réalisation,
- la figure 3 représente une vue en coupe axiale, selon une échelle agrandie, du joint d'étanchéité représenté aux figures 1 et 2, et

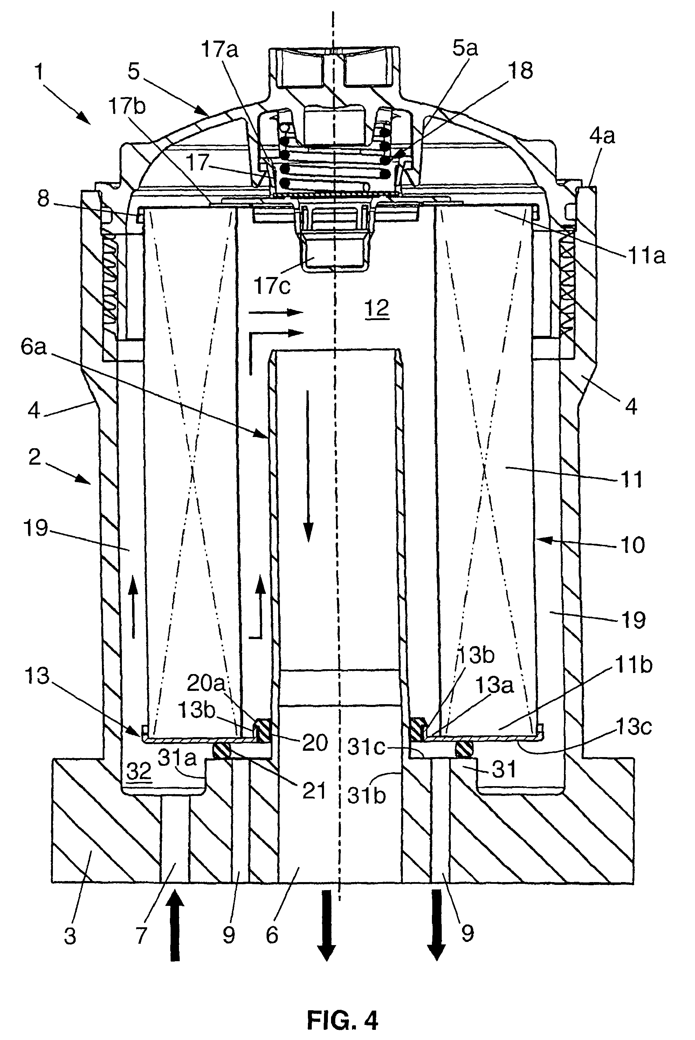

- la figure 4 représente une vue en coupe axiale du filtre à fluide selon un second mode de réalisation des moyens d'étanchéité.

Le filtre ici considéré est destiné à filtrer l'huile de lubrification d'un moteur à combustion interne d'un véhicule automobile.

Ce filtre comprend un boîtier 1 sensiblement rigide qui présente une cuve 2 pourvue d'un fond 3 à partir duquel une paroi latérale 4 s'étend axialement jusqu'à une extrémité 4a. L'extrémité 4a de la paroi latérale annulaire 4 est fermée par un couvercle 5 qui sera décrit plus en détail dans la suite de la description.

Le fond 3 de la cuve 2 est perforé par un alésage central 6 et par un alésage excentré 7.

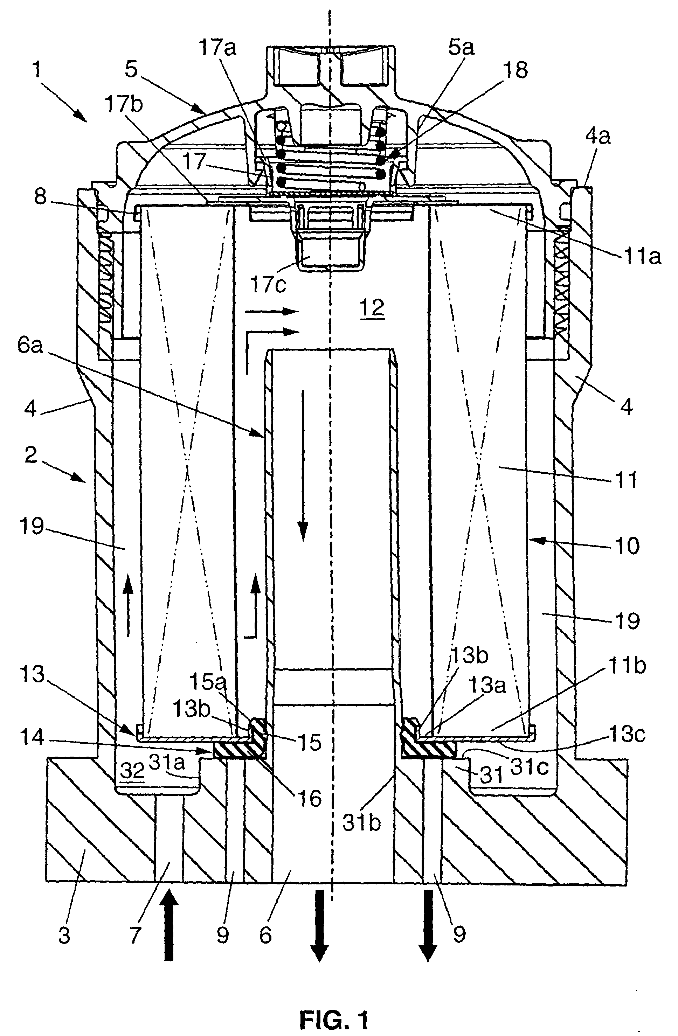

L'alésage central 6 du fond 3 de la cuve 2 se prolonge également par un tube de fluide 6a qui s'étend axialement à partir du fond de la cuve en direction de l'extrémité 4a de la paroi annulaire du boîtier 1. Le tube de fluide 6a ainsi que l'alésage central 6 constituent le passage de sortie de fluide du boîtier. Le tube de fluide 6a peut être inséré dans l'alésage central 6 du fond 3 de la cuve 2 ou alors être formé d'une seule pièce avec le fond 3 comme représenté sur la figure 1.

L'alésage excentré 7 constitue le passage d'entrée du fluide. Bien entendu, il est possible de réaliser plusieurs passages d'entrée à l'aide de plusieurs alésages excentrés disposés en couronne au fond de la cuve. Le passage d'entrée 7 pourrait également être situé sur la paroi annulaire 4 de la cuve 2.

Le fond de la cuve 3 comprend également un canal de purge constitué par un ou plusieurs trous 9 disposés en forme de couronne. Le canal de purge 9 débouche sur une portion annulaire saillante 31 du fond 3 de la cuve 1 et située entre les passages d'entrée 7 et de sortie 6 de fluide.

La portion annulaire 31 du fond 3 présente un contour externe 31a qui délimite avec la paroi annulaire 4 de la cuve 2 une gorge annulaire 32 dans laquelle débouche le passage d'entrée 7 de fluide. Cette gorge annulaire forme un passage de section importante pour la circulation du fluide depuis le passage d'entrée 7 vers une chambre annulaire 19 délimitée par la paroi annulaire 4 de la cuve et la paroi extérieure de l'élément filtrant 11. Le contour interne 31b de la portion annulaire 31 est quand à lui délimité par une partie de la paroi du tube de fluide 6a.

Le filtre comprend également une cartouche filtrante 10 formée d'un élément filtrant annulaire 11 qui délimite un espace intérieur creux 12 dans lequel est disposé le tube de sortie de fluide 6a. Cet élément filtrant 11 s'étend axialement entre une extrémité supérieure 11a située à proximité du couvercle 5 et une extrémité inférieure 11b voisine du fond 3 de la cuve 2. Les extrémités supérieure 11a et inférieure 11b de l'élément filtrant sont fixées de manière étanche respectivement à un flasque supérieur plat et annulaire 8 et un flasque inférieur plat et annulaire 13.

L'élément filtrant 11 peut, par exemple, être constitué en papier plissé, c'est à dire plié selon des lignes en zigzag qui s'étendent selon une direction axiale.

Par ailleurs, chacun des deux flasques supérieur 8 et inférieur 13 peut être constitué en un matériau métallique ou en un matériau plastique rigide fixé de manière étanche, par collage ou par soudure, à l'extrémité de l'élément filtrant 11 qui lui est associée.

Le flasque inférieur 13 est en outre pourvu d'un bord radialement interne 13a qui s'étend au-delà de l'élément filtrant 11, ce bord interne 13a comportant une extrémité repliée 13b qui s'étend axialement en direction de l'extrémité 4a de la paroi annulaire.

Selon un premier mode de réalisation de l'invention, ce flasque inférieur 13 porte également des moyens d'étanchéité 14 qui assurent l'étanchéité entre le passage d'entrée 7 et le canal de purge 9 et entre le passage de sortie de fluide 6 et le canal de purge 9, lorsque la cartouche filtrante 10 est en place dans le boîtier 1.

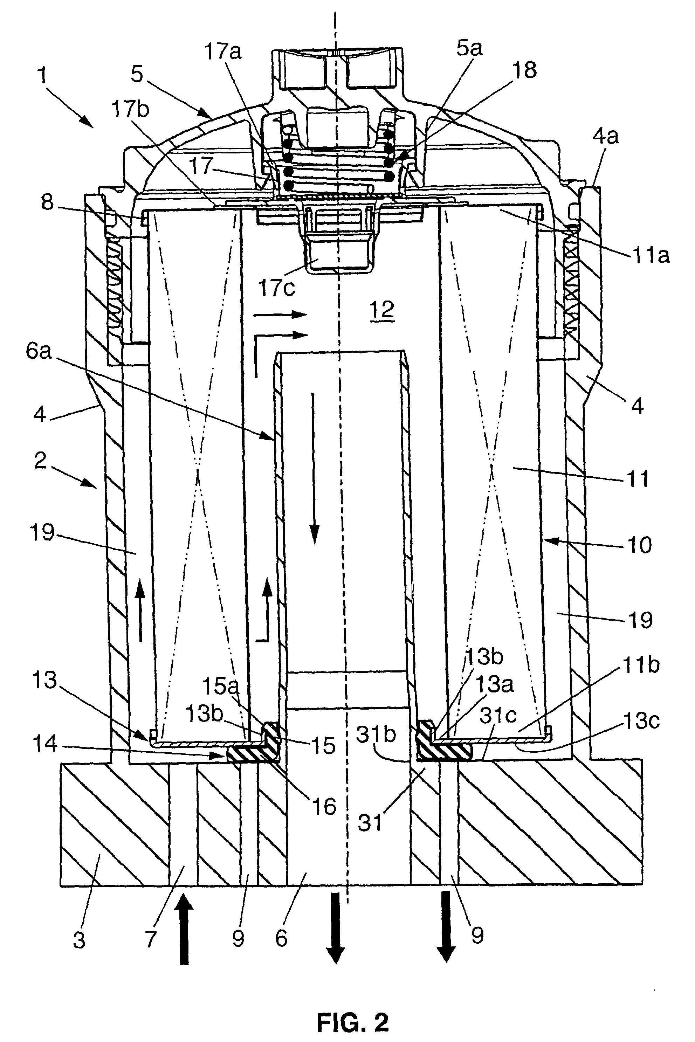

Comme on peut le voir en détail sur la figure 2, ces moyens d'étanchéité 14 comprennent un élément d'étanchéité axiale annulaire 15 qui assure l'étanchéité entre le flasque inférieur 13 et le tube de sortie 6a de fluide, et un élément d'étanchéité radiale annulaire 16 qui assure l'étanchéité entre le canal de purge 9 et le passage d'entrée de fluide 7. Selon ce premier mode de réalisation, les éléments d'étanchéité axiale 15 et radiale 16 sont venus de matière pour former respectivement les portions axiale 15 et radiale 16 d'un même et unique joint d'étanchéité 14. La portion axiale 15 du joint d'étanchéité 14 présente, par ailleurs, un rebord 15a radialement saillant qui vient en butée contre l'extrémité repliée 13b du flasque inférieur 13 de manière à solidariser ledit joint d'étanchéité 14 au flasque inférieur 13. De préférence, le joint d'étanchéité 14 souple présente une portion axiale annulaire 15 dont le diamètre externe est sensiblement supérieure au diamètre de l'extrémité repliée 13b du flasque annulaire inférieur 13 afin d'assurer la tenue du joint d'étanchéité 14 sur le flasque 13 et donc sur la cartouche filtrante 10. De même, l'épaisseur de la portion axiale annulaire 15 du joint est supérieure à l'espace annulaire délimité par l'extrémité repliée 13b du flasque et le tube de sortie de fluide 6a afin de permettre la compression radiale de la portion axiale 15 du joint 14 et d'assurer ainsi l'étanchéité axiale entre le flasque 13 et le tube 6a.

Le boîtier 1 ou plus exactement le couvercle 5 est pourvu de moyens élastiques qui sollicitent constamment et axialement la cartouche filtrante 10 en direction du fond 3 de la cuve 2. La face extérieure 13c du flasque inférieur annulaire et plat 13 comprime alors la portion radiale 16 du joint d'étanchéité contre la face supérieure plane 31c de la portion annulaire 31. Cette compression axiale assure l'étanchéité entre le passage d'entrée 7 de fluide et le canal de purge 9 de fluide. De plus, la face supérieure 31c forme une surface d'appui parallèle au flasque inférieur 13 et symétrique par rapport à l'axe de la cartouche filtrante 10. Ainsi, la cartouche est soumise uniquement à des contraintes de compression axiales qui sont bien supportées par la cartouche, contrairement à des contraintes de flexion qui pourraient provoquer un basculement du flasque inférieur autour d'un axe perpendiculaire à l'axe de la cartouche, et par conséquent une perte d'étanchéité radiale.

Les moyens de sollicitation élastiques du couvercle 5 comprennent principalement une bague cylindrique 17 qui s'étend axialement et qui se termine par un rebord radialement extérieur 17a propre à coopérer aux fins d'accrochage avec des crochets élastiques 5a compris dans le couvercle 5. La bague 17 sert de logement à un ressort hélicoïdal de compression 18 interposé entre la portion intérieure de la bague 17 et le fond du couvercle 5. La bague 17 comprend également une collerette 17b qui s'étend radialement vers l'extérieur et qui prend appui sur le flasque supérieur 8 de la cartouche filtrante 10 pour la repousser axialement vers le fond 3 du boîtier. La baque 17 comprend également une portion inférieure 17c qui s'engage dans une ouverture centrale délimitée par le flasque supérieur annulaire 8 de la cartouche filtrante 10. La rondelle 17b de la bague 17 assure l'étanchéité entre le passage d'entrée de fluide 7 et l'espace intérieur creux 12 délimité par la cartouche filtrante 10.

Ainsi, lors du montage de l'ensemble boîtier-cartouche-couvercle, montage qui commence par l'insertion de la cartouche filtrante 10 à l'intérieur du boîtier 1 de sorte que le tube de sortie 6a soit logé dans l'espace intérieur 12 de la cartouche filtrante 10, et qui s'achève par la fermeture du couvercle 5, la résistance à la compression du ressort 18 a pour effet d'appliquer fermement en direction axiale le flasque inférieur 13 contre la portion 31 du fond 3 avec serrage entre eux du joint d'étanchéité 14 ou plus précisément de la portion radiale 16 du joint 14. De plus, la force de serrage de la portion radiale 16 du joint 14 entre la face extérieure 13c du flasque inférieur 13 et la face supérieure 31c de la portion 31 est sensiblement constante sur toute la périphérie du joint.Après fermeture du couvercle 5 par exemple par vissage, le filtre est prêt à être revissé sur une partie correspondante (non représentée) du moteur.

Le circuit de l'huile est alors celui qui est représenté par des flèches sur la figure 1.

Le fluide est admis à travers le passage d'entrée 7 réalisé sur le fond 3 de la cuve 2 et pénètre dans la gorge annulaire 32, puis il passe directement dans la chambre annulaire 19 sans rencontrer d'obstacle qui pourrait gêner son écoulement.

Ensuite, le fluide traverse ledit élément filtrant 11, ce qui assure la filtration puis il parvient dans l'espace intérieur creux 12 d'où il est évacué axialement à travers le tube de sortie 6a.

Lorsque le filtre doit être démonté, par exemple pour changer la cartouche filtrante 10, il suffit de dévisser le couvercle 5 puis de retirer la cartouche filtrante 10 de la cuve 2 du boîtier 1.

La cartouche filtrante 10 est alors soulevée afin que le joint d'étanchéité 14 se déplace le long du tube de sortie de fluide 6a tout en conservant un contact étanche entre la portion axiale 15 du joint d'étanchéité 14 et le tube de sortie 6a. A cet effet, la portion axiale 15 du joint d'étanchéité 14 peut être pourvue, sur sa paroi interne, d'un bossage annulaire 15b (figure 2) permettant d'assurer la liaison étanche avec le tube de sortie 6a lorsque les moyens élastiques du couvercle 5 ne sollicitent plus la cartouche 10 vers le fond 3 de la cuve 2.

Dans ce cas, on comprend que la chambre annulaire 19 délimitée par la paroi annulaire 4 de la cuve 2 et par l'élément filtrant 9, et qui contient le fluide à filtrer est mise automatiquement en communication avec le canal de purge 9 du filtre.

Ainsi, le fluide non filtré par l'élément filtrant 11 est automatiquement évacué du filtre par le canal de purge 9 et est renvoyé vers un réservoir de fluide. A l'inverse, l'espace intérieur creux 12 de la cartouche filtrante 10 reste étanche par rapport au canal de purge 9, ce qui permet, lors du coulissement du joint d'étanchéité 14 sur le tube de sortie de fluide 6a, d'évacuer le fluide filtré vers le tube de sortie 6a afin que l'huile propre retourne directement dans le moteur. Avantageusement, la longueur du tube de sortie 6a de fluide peut être au moins égale à la moitié de la longueur axiale de la cartouche filtrante 10.

Dans la variante, représentée à la figure 2, de ce premier mode de réalisation, le fond 3 de la cuve 4 présente une surface plane. La portion 31 sur laquelle débouche les canaux de purge 9 est formée par une partie annulaire du fond 3 de la cuve 4, dont le contour interne est délimité par la base du tube de fluide 6a. Le passage d'entrée 7 de fluide est situé, de manière excentrée, au delà du contour extérieur 31a de la portion annulaire 31.

L'épaisseur de la portion radiale 16 du joint 4 est choisie de manière à ménager un espace suffisant pour le passage du fluide depuis le débouché des passage d'entrée 7 vers la chambre annulaire 19.

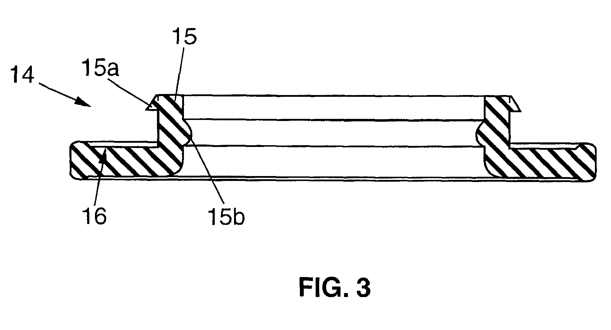

Selon un second mode de réalisation représenté sur la figure 3, les moyens d'étanchéité comprennent deux éléments d'étanchéité 20 et 21 distincts. Plus précisément, les moyens d'étanchéité sont formés par un élément d'étanchéité axiale 20 annulaire qui assure l'étanchéité axiale entre le deuxième flasque 13 et le tube de fluide 6a, et par un élément d'étanchéité radiale 21 annulaire qui est maintenu en appui contre la face supérieure 31c de la portion annulaire 31 par la pression axiale exercée par la face extérieure 13c du flasque 13. du fond 3 pour assurer l'étanchéité radiale entre le flasque inférieur 13 et le fond 3 lorsque la cartouche filtrante 10 est mise en place dans le boîtier.

L'élément d'étanchéité axiale 20 peut comporter également un rebord 20a radialement saillant qui vient en butée contre l'extrémité repliée 13b du flasque 13 de manière à solidariser l'élément d'étanchéité axiale 20 au flasque 13. Toutefois, l'élément d'étanchéité axiale 20 peut également être solidarisé par collage à l'extrémité repliée 13b du flasque. De même, l'élément d'étanchéité radiale 21 peut être également collé sur la portion plate du flasque inférieur 13 ou alors être directement solidarisé sur la portion saillante 31 du fond. Dans ce dernier cas, la portion saillante 31, située radialement vers l'extérieur par rapport au canal de purge 9, peut être pourvue d'une rainure annulaire destinée à loger ledit élément d'étanchéité radiale 21.

## Revendications

1. Filtre à fluide pour moteur de véhicule automobile, comportant :
- un boîtier (1) comprenant un couvercle amovible (5) et une cuve (2) présentant un fond (3) à partir duquel s'étend axialement une paroi latérale (4) sensiblement annulaire fermée par le couvercle (5), le boîtier (1) comprenant également, d'une part, un passage d'entrée de fluide (7) et un passage de sortie de fluide (6), l'un desdits passages d'entrée (7) et de sortie (6) de fluide étant constitué par un tube de fluide (6a) qui s'étend axialement à partir du fond (3) de la cuve (2), et d'autre part, un canal de purge (9) qui débouche sur une portion (31) du fond (3) de la cuve et entre les passages d'entrée (7) et de sortie (6) de fluide,
- une cartouche filtrante (10) comprenant un élément filtrant annulaire (11) délimitant un espace intérieur creux (12) dans lequel est disposé le tube de fluide (6a), l'élément filtrant (11) s'étendant axialement entre une première extrémité (11a) voisine du couvercle et une deuxième extrémité (11b) voisine du fond (3), les première et deuxième extrémités (11a,11b) de l'élément filtrant (11) étant fixées de manière étanche respectivement à des premier (8) et deuxième (13) flasques annulaires sensiblement rigides,
- des moyens d'étanchéité (14) disposés contre le deuxième flasque (13) pour assurer, lorsque la cartouche (10) est en place dans le boîtier (1), l'étanchéité entre le passage d'entrée (7) de fluide et le canal de purge (9) et entre le passage de sortie (6) de fluide et le canal de purge (9), les moyens d'étanchéité (14) comprenant un élément d'étanchéité axiale (15;20) annulaire assurant l'étanchéité axiale entre le deuxième flasque (13) et le tube de fluide (6a), et un élément d'étanchéité radiale (16;21) annulaire, **caractérisé en ce que** ladite portion (31) est une portion annulaire du fond (3) de la cuve qui présente un contour interne (31b) défini par une partie de la paroi du tube de fluide (6a) et une face supérieure (31c) plane sur laquelle l'élément d'étanchéité radiale (16;21) est maintenu en appui par le deuxième flasque (13) de la cartouche (10) pour assurer l'étanchéité radiale entre le deuxième flasque (13) et la portion (31) du fond, lorsque la cartouche (10) est en place dans le boîtier (1).

2. Filtre selon la revendication 1, dans lequel le deuxième flasque (13) annulaire est pourvu d'un bord radialement interne (13a) qui s'étend au-delà de l'élément filtrant (11), ledit bord interne (13a) comportant une extrémité repliée (13b) axialement en direction de l'espace intérieur creux (12) de la cartouche (10) et l'élément d'étanchéité axiale (15;20) des moyens d'étanchéité (14) étant disposé entre l'extrémité repliée (13b) du deuxième flasque (13) et le tube de fluide (6a).

3. Filtre selon la revendication 2, dans lequel l'élément d'étanchéité axiale (15;20) présente un rebord radialement saillant (15a;20a) qui vient en butée contre l'extrémité repliée (13b) du deuxième flasque (13).

4. Filtre selon l'une quelconque des revendications 1 à 3, dans lequel l'élément d'étanchéité axiale (15) et l'élément d'étanchéité radiale (16) sont formés d'une seule pièce, ledit élément d'étanchéité radiale (16) s'étendant radialement vers l'extérieur à partir de l'élément d'étanchéité axiale (15).

5. Filtre selon l'une quelconque des revendications 1 à 4, dans lequel la longueur du tube de fluide (6a) est au moins égale à la moitié de la longueur de la cartouche filtrante (10).

6. Filtre selon l'une quelconque des revendications 1 à 5, dans lequel le passage de sortie de fluide (6) est formé par le tube de fluide (6a).

7. Filtre selon la revendication 6, dans lequel la portion annulaire (31) est saillante et présente un contour externe (31a) qui définit, avec une portion de la paroi annulaire (4) de la cuve (2), une gorge annulaire (32), le passage d'entrée de fluide débouchant dans ladite gorge annulaire (32).

## Claims

1. Fluid filter for a motor vehicle engine, including:
- a housing (1) comprising a removable cover (5) and a tank (2) having a bottom (3) from which a substantially annular lateral wall (4) closed by the cover (5) extends axially, the housing (1) also comprising, on the one hand, a fluid inlet (7) and a fluid outlet (6), one of which is formed by a fluid tube (6a) extending axially from the bottom (3) of the tank (2), and, on the other hand, a purging channel (9) opening on to a portion (31) of the bottom (3) of the tank and between the fluid inlet (7) and the fluid outlet (6),
- a filter cartridge (10) comprising an annular filter element (11) delimiting a hollow inner space (12) in which the fluid tube (6a) is disposed, the filter element (11) extending axially between a first end (11a) close to the cover and a second end (11b) close to the bottom (3), the first and second ends (11a, 11b) of the filter element (11) being fixed in a sealed manner respectively to first (8) and second (13) substantially rigid annular flanges, and
- sealing means (14) disposed against the second flange (13) in order to ensure sealing between the fluid inlet (7) and the purging channel (9) and between the fluid outlet (6) and the purging channel (9) when the cartridge (10) is in place in the housing (1), the sealing means (14) comprising an annular axial sealing element (15; 20) ensuring axial sealing between the second flange (13) and the fluid tube (6a) and an annular radial sealing element (16; 21), **characterized in that** the said portion (31) is an annular portion of the bottom (3) of the tank having an internal contour (31b) defined by part of the wall of the fluid tube (6a) and a flat upper face (31c) against which the radial sealing element (16; 21) is held by the second flange (13) of the cartridge (10) in order to ensure radial sealing between the second flange (13) and the portion (31) of the bottom when the cartridge (10) is in place in the housing (1).

2. Filter according to claim 1, in which the second annular flange (13) is provided with a radially internal edge (13a) extending beyond the filter element (11), the said internal edge (13a) including an end (13b) folded axially in the direction of the hollow inner space (12) of the cartridge (10) and the axial sealing element (15; 20) of the sealing means (14) being disposed between the folded end (13b) of the second flange (13) and the fluid tube (6a).

3. Filter according to claim 2, in which the axial sealing element (15; 20) has a radially projecting rim (15a; 20a) which comes to bear against the folded end (13b) of the second flange (13).

4. Filter according to any one of claims 1 to 3, in which the axial sealing element (15) and the radial sealing element (16) are formed in one piece, the said radial sealing element (16) extending radially towards the exterior from the axial sealing element (15).

5. Filter according to any one of claims 1 to 4, in which the length of the fluid tube (6a) is at least equal to half the length of the filter cartridge (10).

6. Filter according to any one of claims 1 to 5, in which the fluid outlet (6) is formed by the fluid tube (6a).

7. Filter according to claim 6, in which the annular portion (31) is a projecting portion and has an external contour (31a) which, together with a portion of the annular wall (4) of the tank (2), defines an annular groove (32), the fluid inlet opening into the said annular groove (32).

## Patentansprüche

1. Fluidfilter für einen Kraftfahrzeugmotor, der
- ein Gehäuse (1), das einen lösbaren Deckel (5), einen Behälter (2), der einen Boden (3) besitzt, ab welchem sich eine im Wesentlichen ringförmige Wandung (4) axial erstreckt, die mit dem Deckel (5) verschlossen wird, und einerseits einen Fluideinlass (7) und -auslass (6), wobei einer von Fluideinlass (7) und -auslass (6) aus einem Fluidrohr (6a) besteht, das sich ab dem Boden (3) des Behälters (2) axial erstreckt, und andererseits einen Ablasskanal (9), der in einem Teil (31) des Bodens (3) des Behälters und zwischen Fluideinlass (7) und -auslass (6) mündet, umfasst,
- eine Filterpatrone (10), die einen ringförmigen filternden Teil (11) umfasst, der einen leeren Innenraum (12) begrenzt, in welchem das Fluidrohr (6a) angeordnet ist, wobei sich der filternde Teil (11) zwischen einem in der Nähe des Deckels befindlichen ersten Ende (11a) und einem in der Nähe des Bodens (3) befindlichen zweiten Ende (11b) axial erstreckt und erstes und zweites Ende (11a, 11b) des filternden Teils (11) an einem ersten (8) bzw. zweiten ringförmigen, im Wesentlichen starren Flansch (13) dicht befestigt sind, und
- Dichtungsmittel (14) umfasst, die am zweiten Flansch (13) angeordnet sind, um, wenn sich die Patrone (10) an ihrer Stelle im Gehäuse (1) befindet, Dichtheit zwischen Fluideinlass (7) und Ablasskanal (9) und zwischen Fluidauslass (6) und Ablasskanal (9) sicherzustellen, wobei die Dichtungsmittel (14) ein ringförmiges axiales Dichtungselement (15; 20), das zwischen dem zweiten Flansch (13) und dem Fluidrohr (6a) axiale Dichtheit sicherstellt, und ein radiales Dichtungselement (16; 21) umfassen,
**dadurch gekennzeichnet, dass** der Teil (31) ein ringförmiger Teil des Bodens (3) des Behälters ist, der einen Innenumfang (31b), der von einem Teil der Wand des Fluidrohrs (6a) definiert wird, und eine flache Oberseite (31c) besitzt, auf welcher das radiale Dichtungselement (16; 21) aufliegend vom zweiten Flansch (13) der Patrone (10) gehalten wird, um radiale Dichtheit zwischen dem zweiten Flansch (13) und dem Teil (31) des Bodens sicherzustellen, wenn sich die Patrone (10) an ihrer Stelle im Gehäuse (1) befindet.

2. Filter nach Anspruch 1, in welchem der zweite ringförmige Flansch (13) mit einem radialen Innenrand (13a) versehen ist, der sich ab dem filternden Teil (11) erstreckt und ein Ende (13b) umfasst, das in Richtung des leeren Innenraums (12) der Patrone (10) axial umgebogen ist, und das axiale Dichtungselement (15; 20) der Dichtungsmittel (14) zwischen dem umgebogenen Ende (13b) des zweiten Flansches (13) und dem Fluidrohr (6a) angeordnet ist.

3. Filter nach Anspruch 2, in welchem das axiale Dichtungselement (15; 20) einen radial hochstehenden Rand (15a; 20a) besitzt, der an das umgebogene Ende (13b) des zweiten Flansches (13) anschlägt.

4. Filter nach einem der Ansprüche 1 bis 3, in welchem axiales Dichtungselement (15) und radiales Dichtungselement (16) aus einem Stück ausgebildet sind und das radiale Dichtungselement (16) sich ab dem axialen Dichtungselement (15) radial nach außen erstreckt.

5. Filter nach einem der Ansprüche 1 bis 4, in welchem die Länge des Fluidrohrs (6a) mindestens gleich der Hälfte der Länge der Filterpatrone (10) ist.

6. Filter nach einem der Ansprüche 1 bis 5, in welchem der Fluidauslass (6) vom Fluidrohr (6a) gebildet wird.

7. Filter nach Anspruch 6, in welchem der ringförmige Teil (31) übersteht und einen Außenumfang (31a) besitzt, der mit einem Teil der ringförmigen Wandung (4) des Behälters (2) eine ringförmige Auskehlung (32) bildet, in welche der Fluideinlass mündet.
